# EUROPEAN PATENT SPECIFICATION

(11) **EP 1 064 857 B1**
(45) Date of publication and mention of the grant of the patent: **09.06.2004**
(21) Application number: 00113787.6
(22) Date of filing: 29.06.2000
(51) Int. Cl.: A23L 1/30

(54) **Method of producing compositions containing polyamines**
Verfahren zur Herstellung von Polyamin enthaltenden Zusammensetzungen
Méthode pour la production de compositions contenant des polyamines

(30) Priority: 30.06.1999 JP 18463799
(43) Date of publication of application: 03.01.2001
(73) Proprietor: SNOW BRAND MILK PRODUCTS CO., LTD., Sapporo, Hokkaido 065-0043 (JP)
(72) Inventor: Tanimoto, Yoshihiro No. 203,Yukijirushi, Oaza Kawagoe-shi, Saitama-ken (JP); Yakabe, Takafumi, Tsurugashima-shi, Saitama-ken (JP); Shimatani, Masaharu, Sayama-shi, Saitama-ken (JP); Shigematsu, Akinori, Kawagoe-shi, Saitama-ken (JP); Tomizawa, Akira, Iruma-shi, Saitama-ken (JP)
(74) Representative: VOSSIUS & PARTNER

(56) References cited:
- EP-A- 0 729 710
- GB-A- 1 363 783
- DATABASE WPI Week 199503 Derwent Publications Ltd., London, GB; AN 1995-019175 XP002150136 & JP 06 305956 A (SNOW BRAND MILK PROD CO LTD), 1 November 1994 (1994-11-01)
- DATABASE WPI Week 199826 Derwent Publications Ltd., London, GB; AN 1998-289843 XP002150137 & JP 10 099048 A (SNOW BRAND MILK PROD CO LTD), 21 April 1998 (1998-04-21)

## Description

The present invention relates to methods of producing compositions containing polyamines.

The present invention relates to a method of producing compositions containing polyamines easily at low cost, in which milk or milk material is treated with an ultrafiltration (UF) membrane at a pH lower than 5.5 and polyamines are isolated and recovered from the resulting permeate. Furthermore, the present invention relates to methods of producing compositions containing polyamines which have a good flavor, contain high concentrations of spermidine and spermine and are highly utilizable as a food material.

Polyamine is a general term for a linear aliphatic hydrocarbon having two or more primary amino groups. Typical polyamines include putrescine, spermidine and spermine. Generally known physiological actions of polyamines are (1) action on cell growth, (2) stimulation of cell differentiation, (3) action as immunoessential factors, (4) antiallergic action, (5) stimulation of protein synthesis, (6) structural stabilization by an interaction with nucleic acids, (7) control of enzyme activities, and the like. Recently, there have been a number of reports that polyamines effectively stimulate the growth and differentiation of mucosal cells in the gastrointestinal

Examples of these reports are as follows:

O. Peulen et al., Arch. Physiol. Biochem., vol. 106, pp. 46-55, 1998; W.P. Deloyer et al., Arch. Physiol. Biochem., vol. 104, pp. 163-172, 1996; M. Kaouass et al., Dig. Dis, Sci., vol. 41, pp. 1434-1444, 1996; E. Harada et al., Comp. Biochem. Physiol., vol. 109A, pp. 667-673, 1994; G. Capano et al., J. Pediatr. Gastroenterol. Nutr., vol. 19, pp. 34-42, 1994; G.E. Wild et al., Biol. Neonate, vol. 63, pp. 246-257, 1993; Buts J. -P. et al., Digestive Diseases and Science, vol. 38, p. 1091, 1993; Dufour, C. et al., Gastroenterology, vol. 95, p. 112,1988.

The physiological effects of spermidine and spermine were studied and a stimulative action of polyamines on maturation of the gastrointestinal was revealed in these reports. Accordingly, in order to render to food products a stimulative effect on maturation of the gastrointestinal by adding polyamines, there was a need to produce polyamine-containing compositions having a good flavor and higher concentrations of spermidine or spermine.

Reported, examples of the use of polyamines in foods include a konnyaku (a food made from devil's-tongue starch) product in which spermine or spermidine is added to ameliorate the unique konnyaku flavor so as not to adversely affect the flavor of other ingredients cooked together (Japanese Patent Laid-open No. 38690/1994) and a polyamine-admixed nutritional composition in which polyamines are admixed to stimulate protein absorption for promoting satisfactory growth and maintaining good healthy conditions (Japanese Patent Laid-open No. 1994-305956). Examples of the use of polyamines as medicines include a method and ingestible compositions for the suppression of gastric acid secretion (Japanese Patent Laid-open No. 131914/1983) and immunoactivators (Japanese Patent Laid-open No. 98015/1984; Japanese Patent Laid Open No. 223514/1990).

Examples of conventional methods to produce polyamine compositions for the abovementioned purposes include a method of producing polyamines using milts as the raw material (Japanese Patent Laid-open No. 238094/1996), a method of producing polyamines using animal organs as the raw material (Japanese Patent Laid-open No. 206025/1997), and a method of producing polyamines from yeast cells and a nutritional polyamine-containing composition produced by the same method (Japanese Patent Laid-open No. 52291/1998). Since milts, animal organs and yeast cells are used as the raw material, polyamines produced by these methods smell of fish, animals and yeast and the flavor is not altogether agreeable. If milts are used as the raw material for producing a polyamine-containing composition, the material is highly viscous and difficult to handle, making purification inefficient.

In the abovementioned polyamine-admixed nutritional composition (Japanese Patent Laid-open No. 305956/1994), polyamines are isolated and extracted from milk materials from mammals using an ultrafiltration (UF) membrane or ion exchange resins. However, the yield ofpolyamine extraction is low and problems remain to be solved for practical use of this method.

An objective of the present invention is to provide a method of producing polyamine-containing compositions which have a good flavor and higher concentrations of spermidine and spermine, from milk or milk material.

In the course of an intensive study to develop a method of producing polyamine-containing compositions having higher concentrations of spermidine and spermine, the present inventors found that polyamine-containing compositions which have a good flavor and higher concentrations of spermidine and spermine can be produced by treating milk or milk material with an UF membrane at a pH lower than 5.5 and isolating and recovering polyamines from the resulting permeate to efficiently fractionate polyamines in the milk or milk material, and completed the present invention.

In the present invention, polyamine-containing compositions are produced by treating milk or milk material with an UF membrane at a pH lower than 5,5 and isolating and recovering polyamines from the resulting permeate. In this case, the pH has a great impact, such that the recovery of the polyamine-containing compositions is poor if the pH is higher than 5.5.

Examples of the milk to be used as a raw material in this invention include any milk of mammals, such as cow milk, goat milk and ewe milk. Examples ofthe milk material include any milk component isolated and/or fractionated using an ion exchange method, membrane treatment, electrodialysis, or the like, such as acid casein, acid whey, cheese whey, whey protein concentrate (WPC), whey protein isolate (WPI), powdered skim milk, butter milk and cream.

The pH of the milk or milk material can be adjusted below 5.5 by adding acid to a solution of the milk or milk material or by adding microorganisms for microbial growth. The addition of the acid and microorganisms can be done simultaneously. Examples of the acid to be used include any inorganic and organic acid, such as lactic acid, citric acid, sulfuric acid, hydrochloric acid, acetic acid and phosphoric acid. Microorganisms can be any microorganisms, which can utilize and grow on milk components and produce organic acids, such as lactic acid bacteria, propionic acid bacteria and bifidobacteria. The presence of enzymes such as rennet should not cause any problem.

Thus, polyamine-containing compositions which have a good flavor and higher concentrations of spermidine and spermine can be produced by treating milk or milk material with an UF membrane at a pH lower than 5.5 and isolating and recovering polyamines.

Preferred embodiments will now be described in detail.

Polyamine-containing compositions can be produced by lowering the pH of milk or milk material to less than 5.5 with the addition of acid or by the growth of microorganisms, treating the acidified milk or milk materials with an UF membrane and isolating and recovering polyamines from the resulting permeate.

Examples of the UF membrane can be any membrane having a fractionation molecular weight of 1,000-100,000 including organic membranes, such as cellulose, cellulose acetate, polysulfone, polyamide, polyacrylonitrile, polyethylene tetrafluoride, polyester, polypropylene or the like, and inorganic membranes such as ceramics with aluminum, zirconium, titanium or the like, and glass (silica) or the like.

Steps such as a treatment with ion exchange resins, treatment with NF (nanofiltration), and electrodialysis can be used for the purification or desalting of the polyamine-containing solution. These steps can be used in combination to obtain further purified polyamine-containing compositions.

The treatment with ion exchange resins can be carried out such that milk or milk material is treated with an UF membrane at a pH below 5.5, after which the resulting permeate, with or without adjusting the pH by adding alkali such as sodium hydroxide and potassium hydroxide, is passed through a column filled with ion exchange resins to separate polyamines from contaminants such as amino acids, peptides, proteins and sugars. Any ion exchange resins having an ion exchange group, such as sulfonyl, sulfopropyl, phosphate, carboxymethyl, aminoethyl, diethylamino, quaternary aminoethyl and quaternary ammonium groups, can be used. Both cation exchange resins and anion exchange resins can be used.

If cation exchange resins are used, since polyamines are adsorbed onto cation exchange resins, the unadsorbed substances are first thoroughly removed, then the polyamines can be eluted and recovered using acidic solutions such as sulfuric acid or hydrochloric acid, or salt solutions such as sodium chloride. If anion exchange resins are used, polyamines can be recovered from the unabsorbed fraction since polyamines are not adsorbed onto anion exchange resins.

NF membranes can be used for desalting. Any NF membrane with a salt inhibition rate of 30-80% can be used.

Electrodialysis can be carried out by placing a polyamine-containing solution and a salt solution alternately in compartments sectioned by cation exchange membranes and anion exchange membranes. Desirable conditions for electrodialysis are a primary current density of 0.5-15 A/dm² and a voltage of 0.1-1.5 V/bath.

The polyamine-containing compositions thus obtained can be used as solutions without further processing or spray-dried or lyophilized to obtain powdered products.

The polyamine-containing compositions thus obtained can be used as medicaments and medicinal nutrient compositions such as enteral nutrients, nutrient compositions for infants, such as powdered milk for infants and baby foods, and as raw materials for nutritionally fortified foods or general food products

The present invention will be explained in more detail with reference to the following examples and comparative examples.

Analysis of polyamine contents in the examples and comparative examples was carried out by the method of Kawakami et al. (Japanese Journal of Pediatric Gastroenterology and Nutrition, vol. 9, pp. 115- 121, 1995).

### [Example 1]

A composition containing polyamines derived from milk was produced. Raw milk (cow's milk) was centrifuged (2,000 g, 4C, 10 minutes) to prepare skimmed milk, To this skimmed milk, 1N hydrochloric acid was added to adjust the pH to 4.6, and the resulting milk was centrifuged (35,000 g, 4C, 20 minutes) to remove casein. This acid whey thus obtained was treated with an UF membrane with a fractionation molecular weight of 8,000 to recover an UF permeate. This permeate was passed through a column filled with cation exchange resins (Dowex 50WX8 (H⁺ form)) to allow polyamines to adsorb onto the cation exchange resins, after which the column was thoroughly washed with a 0.5 M sodium chloride solution to remove impurities, then the adsorbed polyamines were eluted with 6N hydrochloric acid. This eluate was neutralized with the addition of a sodium hydroxide solution, electrodialyzed for desalting, and lyophilized to obtain a polyamine-containing composition.

Thus, 528 mg of a polyamine-containing composition were obtained from 1,000 L of acid whey. The sum of the percentage of spermidine and spermine in the total polyamines was 97.5%.

### [Example 2]

A polyamine-containing composition was produced using cottage cheese whey as a milk material. Whey (pH 4.3) produced during cottage cheese manufacturing was treated with an UF membrane (having a fractionation molecular weight of 5,000) to recover a permeate. This permeate was passed through a column filled with cation exchange resins (Dowex 50WX8 (H⁺ form)) to allow polyamines to adsorb onto the cation exchange resins, after which the column was thoroughly washed with a 0.6 M sodium chloride solution to remove impurities, then the adsorbed polyamines were eluted with 6N hydrochloric acid. This eluate was neutralized with the addition of a sodium hydroxide solution, electrodialyzed for desalting, and lyophilized to obtain a polyamine-containing composition.

Thus, 426 mg of a polyamine-containing composition were obtained from 1,000 L of cottage cheese whey. The sum of the percentage of spermidine and spermine in the total polyamines was 98.5%.

### [Comparative Example 1]

A polyamine-containing composition was produced using Gouda cheese whey as a milk material. Whey (pH 6.2) produced during Gouda cheese manufacturing was treated with an UF membrane (having a fractionation molecular weight of 5,000) to recover a permeate. This permeate was passed through a column filled with cation exchange resins (Dowex 50WX8 (H⁺ form)) to allow polyamines to adsorb onto the cation exchange resins, after which the column was thoroughly washed with a 0.6 M sodium chloride solution to remove impurities, then the adsorbed polyamines were eluted with 6N hydrochloric acid. This eluate was neutralized with the addition of a sodium hydroxide solution, electrodialyzed for desalting, and lyophilized to obtain a polyamine-containing composition.

Thus, 515 mg of a polyamine-containing composition were obtained from 1,000 L of Gouda cheese whey. However, neither spermidine nor spermine was detected in this polyamine-containing composition.

### [Test Example 1]

Polyamine-containing compositions each prepared using milts, animal organs, yeast cells and milk as a raw material were added to a food product, and the effect of the addition on the quality of the food product was evaluated by a sensory evaluation. Polyamine-containing compositions were prepared from milts by the method of Japanese Patent Laid-open No. 238094/1996, from animal organs by the method of Japanese Patent Laid-open No. 206025/1997, and from yeast cells by the method of Japanese Patent Laid-open No. 52291/1998, respectively. The polyamine-containing compositions prepared in Examples 1 and 2 were used as polyamines prepared from milk or milk material. The polyamine-containing compositions obtained from different raw materials were added to whole fat powdered milk so as to adjust the concentration of the sum of spermidine and spermine to 10 mg/100 g to prepare polyamine-added compositions for a sensory evaluation. The evaluation was for "odor" and "taste."

The sensory evaluation was carried out by 10 male and 10 female trained panelists using a scoring method. Results of the sensory test are shown as averages of the scores given by the 20 panelists, according to the following scales for evaluation.

Results are shown in Table 1. The scales for evaluation are as follows:
Odor - 5: No abnormal odor; 4: faintly abnormal odor; 3: slightly abnormal odor; 2: abnormal odor; and 1: strongly abnormal odor.
Taste - 5: No abnormal taste; 4: faintly abnormal taste; 3: slightly abnormal taste; 2: abnormal taste; and 1: strongly abnormal taste.

**I. [TABLE 1]**

| Raw material | Odor | Taste |
|---|---|---|
| Salmon milts | 1.9 | 1.1 |
| Caw pancreas | 1.1 | 1.0 |
| Pig pancreas | 1.5 | 1.4 |
| Yeast cells (*Candida utilis*) | 4.0 | 4.6 |
| Acid whey | 4.8 | 4.8 |
| Cottage cheese whey | 4.7 | 4.8 |
| Control (whole milk powder) | 4.9 | 4.9 |

The present invention enables polyamine-containing compositions to be easily obtained at low cost by treating milk or milk material with an ultrafiltration (UF) membrane at a pH below 5.5 and isolating and recovering polyamines from the resulting permeate.

Since the polyamine-containing compositions obtained in the present invention are characterized by a good flavor and high contents of spermidine and spermine, they can be effectively used as medicaments and medicinal nutrient compositions, such as enteral nutrients, nutrient compositions for infants, such as infant powdered milk and baby foods, and as raw materials for nutritionally fortified food products and general food products.

## Claims

1. A method of producing polyamine-containing compositions which includes treating milk or milk material with an ultrafiltration (UF) membrane at a pH lower than 5.5 and isolating and recovering polyamines from the resulting permeate.

2. A method of producing polyamine-containing compositions as claimed in claim 1 wherein inorganic acids or organic acids, and/or microorganism, which utilize milk components for growth to produce organic acids, are added to lower the pH of the milk or milk material to 5.5.

3. A method of producing polyamine-containing compositions as claimed in claim 1 or 2, wherein polyamines are isolated by one or more steps of an ion exchange process, membrane fractionation process and electrodialysis.

4. A method of producing polyamine-containing compositions as claimed in claim 2 or 3, wherein said inorganic acids of organic acids are selected from lactic acid, citric acid, sulfuric acid, hydrochloric acid, acetic acid and phosphoric acid.

5. A method of producing polyamine-containing compositions as claimed in any of claims 2 to 4, wherein said microorganisms are selected from lactic acid bacteria, propionic acid bacteria and bifidobacteria.

## Patentansprüche

1. Verfahren zur Herstellung von Polyamin-enthaltenden Zusammensetzungen, welches die Behandlung von Milch oder Milchmaterial mit einer Ultrafiltrations(UF)-Membran bei einem pH-Wert von weniger als 5,5 und die Isolation und Gewinnung von Polyaminen aus dem resultierenden Permeat einschließt.

2. Verfahren zur Herstellung von Polyamin-enthaltenden Zusammensetzungen gemäß Anspruch 1, wobei anorganische oder organische Säuren und/oder Mikroorganismen, welche Milchkomponenten zum Wachstum oder zur Produktion von organischen Säuren nutzen, zugegeben werden, um den pH-Wert der Milch oder des Milchmaterials auf 5,5 zu verringern.

3. Verfahren zur Herstellung von Polyamin-enthaltenden Zusammensetzungen gemäß Anspruch 1 oder 2, wobei die Polyamine durch einen oder mehrere Schritte, ausgewählt aus einem Ionenaustauschverfahren, einem Membranfraktionierungsverfahren und einer Elektrodialyse isoliert werden.

4. Verfahren zur Herstellung von Polyamin-enthaltenden Zusammensetzungen gemäß Anspruch 2 oder 3, wobei die anorganischen oder organischen Säuren ausgewählt sind aus Milchsäure, Citronensäure, Schwefelsäure, Salzsäure, Essigsäure und Phosphorsäure.

5. Verfahren zur Herstellung von Polyamin-enthaltenden Zusammensetzungen gemäß einem der Ansprüche 2 bis 4, wobei die Mikroorganismen ausgewählt sind aus Milchsäurebakterien, Propionsäurebakterien und Bifidobakterien.

## Revendications

1. Procédé de production de compositions contenant des polyamines, qui inclut le traitement de lait ou de matière laitière avec une membrane d'ultrafiltration (UF) à un pH inférieur à 5,5 et l'isolement et la récupération des polyamines à partir du perméat obtenu.

2. Procédé de production de compositions contenant des polyamines selon la revendication 1, dans lequel des acides minéraux ou des acides organiques, et/ou des micro-organismes qui utilisent des constituants laitiers pour se développer et produire des acides organiques, sont ajoutés pour abaisser le pH du lait ou de la matière laitière à 5,5.

3. Procédé de production de compositions contenant des polyamines selon la revendication 1 ou 2, dans lequel les polyamines sont isolées par une ou plusieurs étapes parmi un procédé d'échange d'ions, un procédé de fractionnement par membrane et l'électrodialyse.

4. Procédé de production de compositions contenant des polyamines selon la revendication 2 ou 3, dans lequel lesdits acides minéraux ou acides organiques sont choisis parmi l'acide lactique, l'acide citrique, l'acide sulfurique, l'acide chlorhydrique l'acide acétique et l'acide phosphorique.

5. Procédé de production de compositions contenant des polyamines selon l'une quelconque des revendications 2 à 4, dans lequel lesdits micro-organismes sont choisis parmi les bactéries lactiques, les bactéries propioniques et les bifidobactéries.
